# EUROPÄISCHE PATENTSCHRIFT

(11) **EP 1 194 326 B1**
(45) Veröffentlichungstag und Bekanntmachung des Hinweises auf die Patenterteilung: **06.10.2004**
(21) Anmeldenummer: 01945034.5
(22) Anmeldetag: 24.04.2001
(51) Int. Cl.: B62D 1/185, F16C 3/035, F16D 3/06, F16C 27/04

(54) **TELESKOPMECHANISMUS**
TELESCOPIC MECHANISM
MECANISME TELESCOPIQUE

(30) Priorität: 19.05.2000 DE 20008927 U; 21.08.2000 DE 20014397 U
(43) Veröffentlichungstag der Anmeldung: 10.04.2002
(73) Patentinhaber: Schwarzbich, Jörg, 33615 Bielefeld (DE)
(72) Erfinder: Schwarzbich, Jörg, 33615 Bielefeld (DE)
(74) Vertreter: Wiebusch, Manfred
(86) Internationale Anmeldenummer: PCT/EP2001/004583
(87) Internationale Veröffentlichungsnummer: WO 2001/089909

(56) Entgegenhaltungen:
- EP-A- 0 281 723
- CH-A- 117 835
- GB-A- 530 342
- GB-A- 1 450 124
- PATENT ABSTRACTS OF JAPAN vol. 008, no. 186 (M-320), 25. August 1984 (1984-08-25) -& JP 59 077124 A (HEIWA HATSUJIYOU KK), 2. Mai 1984 (1984-05-02)

## Beschreibung

Die Erfindung betrifft einen Teleskopmechanismus, insbesondere für Lenksäulen von Kraftfahrzeugen, mit einem Innenglied, das an mindestens einer Seite eine Abflachung aufweist, und einem zu dem Innenglied komplementären Außenglied, in dem das Innenglied mit Wälzkörpern geführt ist, die an der Abflachung abrollen und dazu ausgebildet sind, ein Drehmoment zwischen Innenglied und Außenglied zu übertragen.

Bei Kraftfahrzeugen mit positionsverstellbarem Lenkrad und/oder Sicherheitslenksäule muß die Lenksäule einen Teleskopmechanismus aufweisen, der eine Längenverstellung der Lenksäule ermöglicht, damit die Position des Lenkrads an die jeweilige Sitzposition des Fahrers angepaßt werden kann und/oder sich die Lenksäule bei einem Aufprall verkürzen kann. Das Innenglied und das Außenglied sind teleskopartig ineinander geführt und bilden zusammen die Lenksäule. Beispielsweise ist das Außenglied an einem Ende mit dem Lenkgetriebe verbunden, während das Innenglied am entgegengesetzten Ende das Lenkrad trägt. Der Teleskopmechanismus soll einerseits eine leichtgängige Axialverstellung des Innengliedes relativ zum Außenglied ermöglichen, soll jedoch andererseits eine möglichst spielfreie und symmetrische Übertragung des Lenkdrehmoments vom Innenglied auf das Außenglied sicherstellen. Symmetrisch bedeutet in diesem Zusammenhang, daß die Verdrehung des Innengliedes relativ zum Außenglied, die durch das auf das Lenkrad ausgeübte Drehmoment verursacht wird, unabhängig von der Wirkrichtung dieses Drehmoments ist, so daß dem Fahrer bei Lenkradeinschlägen in beiden Richtungen dasselbe Lenkgefühl vermittelt wird.

Aus EP-A-0 281 723 ist ein Teleskopmechanismus der oben genannten Art bekannt, bei dem die Laufbahnen des Außengliedes, an denen die Wälzkörper abrollen, zum Zweck der Spielbeseitigung federnd gelagert sind.

Grundsätzlich ist es bei hochbelasteten Radiallagern auch bekannt, die Wälzkörper als elastische hohle Zylinder oder als Schraubenfedern auszubilden, etwa um hefige Stöße abzufedern (CH 117 835 A) oder um Wärmeausdehnungen auszugleichen, wenn das Lager heiß läuft (JP 59 077123 A). In diesen Fällen brauchen die Wälzkörper jedoch kein Drehmoment zu übertragen.

Aufgabe der Erfindung ist es, einen Teleskopmechanismus zu schaffen. bei dem das in Drehrichtung vorhandene Spiel zwischen Innenglied und Außenglied auf ein Minimum reduziert ist, ohne daß die Axialverstellung schwergängig wird.

Diese Aufgabe wird erfindungsgemäß dadurch gelöst, daß zumindest einige der Wälzkörper als elastische Hohlkörper ausgebildet sind.

Während bei herkömmlichen Wälzlagern die Wälzkörper als massive und praktisch nicht verformbare Rollen ausgebildet sind, weisen die erfindungsgemäß anstelle der Rollen vorgesehenen Hohlkörper eine gewisse elastische Verformbarkeit auf, so daß sie sich selbsttätig an das Lichtmaß zwischen der Abflachung des Innengliedes und der ihr gegenüberliegenden Abflachung des Außengliedes anpassen. Der im unbelasteten Zustand kreisförmige Außenquerschnitt der Hohlkörper wird dabei geringfügig zu einem Oval verformt. Während der Rollbewegungen bei der Axialverstellung des Teleskopmechanismus kommt es zu einer fortlaufenden elastischen Verformung, bei der das Oval ständig seine Orientierung relativ zum Hohlkörper ändert, jedoch seine Exzentrizität beibehält. Diese elastische Verformung setzt der Rollbewegung und damit der Axialverstellung des Innenteils relativ zum Außenteil nur einen geringen Widerstand entgegen, so daß eine leichtgängige Verstellung ermöglicht wird. Da jedoch die Hohlkörper sowohl am Innenteil als auch am Außenteil ständig unter Spannung anliegen, tritt bei einer Drehung des Innenteils keinerlei Spiel auf. Das auf das Innenteil wirkende Drehmoment hat zur Folge, daß der Querschnitt der Hohlkörper an einem Ende stärker abgeflacht wird als am anderen Ende, so daß sich eine geringfügige Verdrehung des Innengliedes relativ zum Außenglied ergibt. Bei einem in entgegengesetzter Richtung wirkenden Drehmoment tritt diese Verformung am entgegengesetzten Ende der Schraubenfeder auf. Ihr Ausmaß ist jedoch nur vom Betrag des Drehmoments und nicht von dessen Richtung abhängig. Das Ausmaß der Verdrehung ist in erster Näherung proportional zum aufgewandten Drehmoment und läßt sich durch geeignete Wahl der Härte der Hohlkörper so einstellen, daß dem Fahrer ein sicheres Lenkgefühl vermittelt wird.

Bei der Verwendung des erfindungsgemäßen Teleskopmechanismus in einer Kraftfahrzeug-Lenksäule ergibt sich darüber hinaus der Vorteil, daß durch die elastische Verformbarkeit der Hohlkörper eine gewisse Vibrationsdämpfung erreicht wird, so daß Vibrationen des Lenkgetriebes nicht oder nur in vermindertem Ausmaß auf das Lenkrad übertragen werden.

Vorteilhafte Ausgestaltungen der Erfindung ergeben sich aus den Unteransprüchen.

Bevorzugt werden die Hohlkörper durch Schraubenfedern gebildet. Dabei handelt es sich bevorzugt um Zugfedern, deren Windungen im unbelasteten Zustand auf Block liegen. Der Federstahldraht, aus dem die Schraubenfedern gewickelt sind, kann wahlweise auch einen rechteckigen oder quadratischen Querschnitt haben, so daß die äußere Gestalt der Schraubenfeder der äußeren Gestalt eines herkömmlichen rollenförmigen Wälzkörpers sehr ähnlich ist.

In einer anderen Ausführungsform sind die Wälzkörper als Hohlzylinder ausgebilbildet, beispielsweise als nahtlose Röhrchen oder als zu einem Hohlzylinder aufgerollte Zuschnitte aus Federstahlblech, deren Enden an einer Naht auf Stoß an einander liegen. Im letzteren Fall verläuft die Naht vorzugsweise zickzack- oder wellenförmig oder sie läuft in mindestens einer vollständigen Windung um den Umfang des Zylinders um, so daß beim Überrollen der Naht keine wesentliche Änderung des elastischen Verformungswiderstands eintritt.

Die Wälzkörper können in üblicher Weise in einem Käfig gehalten sein.

Der Außenquerschnitt des Innengliedes und der Innenquerschnitt des Außengliedes haben vorzugsweise die Form eines regelmäßigen Polygons, beispielsweise eines gleichseitigen Dreiecks, so daß an dem Innenglied drei Abflachungen vorhanden sind, die sich jeweils über einen Satz von Wälzkörpern am Außenglied abstützen.

Der Käfig, der beispielsweise durch ein Kunststoff-Spritzteil gebildet werden kann, weist eine der Anzahl der Seiten des Polygons entsprechende Anzahl von Abschnitten auf, die jeweils einen Satz von Wälzkörpern aufnehmen. Vorzugsweise sind diese Abschnitte über flexible Stege miteinander verbunden. Der Käfig kann dann zunächst als flaches Band hergestellt werden, in das sich die einzelnen Wälzkörper problemlos einlegen oder einclipsen lassen, und wird dann zu einem Polygon gefaltet und um das Innenglied herumgelegt und axial in den Zwischenraum zwischen Innenglied und Außenglied eingeschoben.

Die Dicke der einzelnen Käfigabschnitte kann unter Berücksichtigung unvermeidlicher Toleranzen so an das Lichtmaß zwischen Innenglied und Außenglied angepaßt werden, daß sich das Innenglied direkt über den Käfig am Außenglied abstützt, wenn die elastische Verformung der Hohlkörper einen gewissen Wert übersteigt. Auf diese Weise läßt sich die maximale Verdrehung zwischen Innenglied und Außenglied durch geeignete Gestaltung des Käfigs begrenzen. Alternativ oder zusätzlich ist es zur Begrenzung der Verdrehung auch möglich, in jeden Hohlkörper eine massive Rolle einzustecken, die mit gewissem Spiel in dem Hohlkörper liegt und das Maß der elastischen Abflachung des Hohlkörpers begrenzt. Weiterhin ist es denkbar, in den Fenstern des Käfigs abwechselnd Hohlkörper und massive Rollen als Wälzkörper einzusetzen. Die Rollen haben dann einen etwas kleineren Durchmesser als die Hohlkörper, so daß sie mit Spiel zwischen Innen- und Außenglied liegen und nur die Verformung der Hohlkörper begrenzen.

Im folgenden werden bevorzugte Ausführungsbeispiele der Erfindung anhand der Zeichnung näher erläutert.

Es zeigen:
- Fig. 1: einen Teleskopmechanismus im Querschnitt;
- Fig. 2: einen Ausschnitt eines Käfigs mit eingesetzten Wälzkörpem im Zustand vor dem Einbau in den Teleskopmechanismus;
- Fig. 3a und 3b: eine perspektivische Ansicht und einen Zuschnitt eines Wälzkörpers gemäß einer anderen Ausführungsform; und
- Fig. 4a bis 5b: Darstellungen analog zu Figuren 3a und 3b für weitere Ausführungsformen.

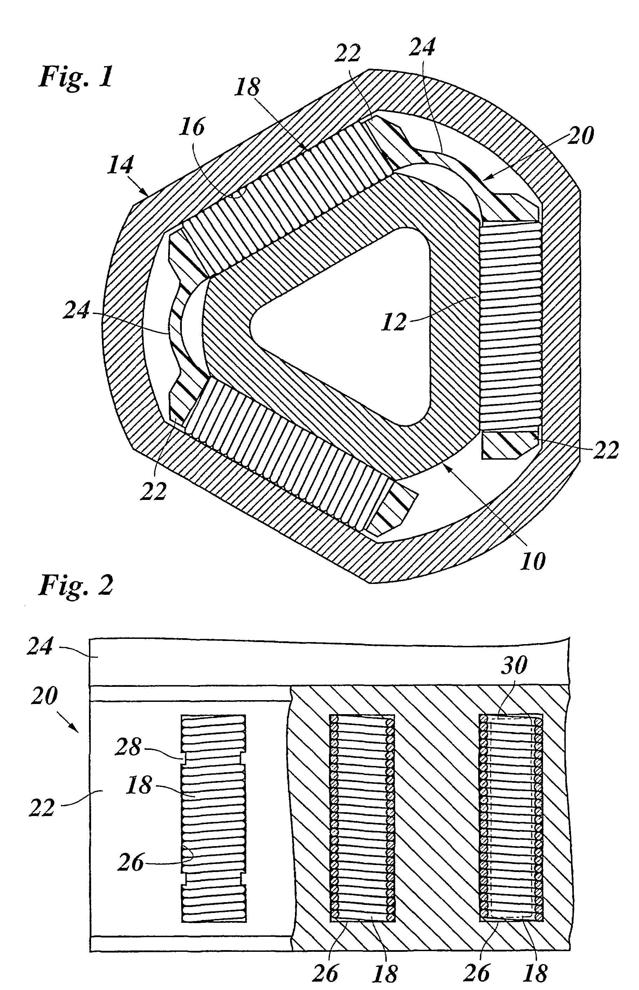

Der in Figur 1 gezeigte Teleskopmechanismus weist ein als Strangprofil aus Metall, beispielsweise aus Stahl ausgebildetes Innenglied 10 auf, dessen Außenquerschnitt die Form eines gleichseitigen, an den Ecken abgerundeten Dreiecks hat und somit drei in gleichmäßigen Winkelabständen angeordnete Abflachungen 12 bildet. Das Innenglied 10 ist mit Abstand von einem gleichfalls als Strangprofil aus Metall ausgebildeten Außenglied 14 umgeben, dessen Innenquerschnitt an den Außenquerschnitt des Innengliedes angepaßt ist und somit ebenfalls drei Abflachungen 16 bildet, die denen des Innengliedes parallel in Abstand gegenüberliegen. Die Zwischenräume zwischen den einander zugewandten Abflachungen 12 und 16 des Innengliedes und des Außengliedes werden spielfrei von Wälzkörpern ausgefüllt, die durch auf Block gewickelte Schraubenfedem 18 gebildet werden. Die Schraubenfedem 18 rollen mit ihrem äußeren Umfang ähnlich wie die Wälzkörper eines herkömmlichen Rollenlagers an den Abflachungen 12 und 16 ab, so daß eine leichtgängige Axialverstellung des Innengliedes 10 relativ zum Außenglied 14 ermöglicht wird.

Die Schraubenfedern 18 sind in einem einstückigen Käfig 20 aus Kunststoff gehalten. Der Käfig 20 bildet drei verdickte Abschnitte 22 die durch zwei flexible Stege 24 miteinander verbunden sind. Jeder Abschnitt 22 nimmt einen Satz der Schraubenfedern 18 auf, die in Axialrichtung, also in der Richtung senkrecht zur Zeichenebene in Figur 1, hintereinanderliegen und so eine stabile Führung des Innenglieds 10 im Außenglied 14 sicherstellen.

Als Beispiel kann angenommen werden, daß das Innenglied 10 und das Außenglied 14 zusammen eine längenverstellbare Lenksäule bilden. Das Lenkrad ist dann entweder am Innenglied 10 oder am Außenglied 14 montiert, während das jeweilige andere Bauteil mit dem Lenkgetriebe verbunden ist. Im hier betrachteten Beispiel soll das Innenglied 10 mit dem Lenkrad verbunden sein. Wenn der Fahrer das Lenkrad dreht, wird das auf das Innenglied 10 ausgeübte Drehmoment durch die Schraubenfedern 18 spielfrei auf das Außenglied 14 übertragen. Der Querschnitt der Schraubenfedern wird dabei geringfügig zu einem Oval verformt. Bei einem im Uhrzeigersinn in Figur 1 wirkenden Drehmoment werden jeweils die in Gegenuhrzeigerrichtung weisenden Enden der Schraubenfedern 18 zwischen dem Innenglied 10 und dem Außenglied 14 zusammengedrückt. Die maximale Verformung ist spätestens dann erreicht, wenn die verdickten Abschnitte 22 des Käfigs zwischen den Abflachungen 12 und 16 eingespannt werden. In diesem Zustand würde zwar die axiale Verstellung des Teleskopmechanismus durch die Reibungskräfte des Käfigs 20 stark gebremst, doch ist dies im vorliegenden Anwendungsfall unschädlich, da eine Axialverstellung zur Einstellung der Position des Lenkrads normalerweise im drehmomentfreien Zustand vorgenommen wird.

Die drei Abschnitte 22 des Käfigs 20, die durch die beiden flexiblen Stege 24 miteinander verbunden sind, können vor dem Einbau in den Teleskopmechanismus die Form eines flachen, gestreckten Bandes annehmen, von dem ein Ausschnitt in Figur 2 gezeigt ist. Dort ist teils in der Draufsicht und teils im Schnitt einer der Abschnitte 22 zu erkennen, in dem drei in Axialrichtung des Teleskopmechanismus hintereinanderliegende Schraubenfedern 18 in entsprechenden fensterartigen Durchbrüchen 26 gehalten sind. Die Wände der Durchbrüche 26 weisen sowohl auf der in Figur 2 sichtbaren Oberseite des Abschnitts 22 als auch auf der unsichtbaren Rückseite nach innen vorspringenden Nasen 28 auf, die die jeweilige Schraubenfeder 18 formschlüssig in Position halten und so bemessen sind, daß sich die Schraubenfedern bei der Montage elastisch einklipsen lassen.

Bei der rechten Schraubenfeder 18 in Figur 2 ist strichpunktiert eine massive Rolle 30 angedeutet, die in die Schraubenfeder eingesteckt ist und die Windungen der Schraubenfeder mit Spiel von innen abstützt, so daß die elastische Verformung des Querschnitts der Schraubenfeder 18 begrenzt wird. Diese Rolle 30 hat ebenso wie der Käfig 20 die Funktion, die relative Verdrehung zwischen Innenglied 10 und Außenglied 14 zu begrenzen. Die Verwendung der Rollen 30 hat jedoch den Vorteil, daß eine leichtgängige Verstellung des Teleskopmechanismus auch unter Drehmomentbelastung ermöglicht wird.

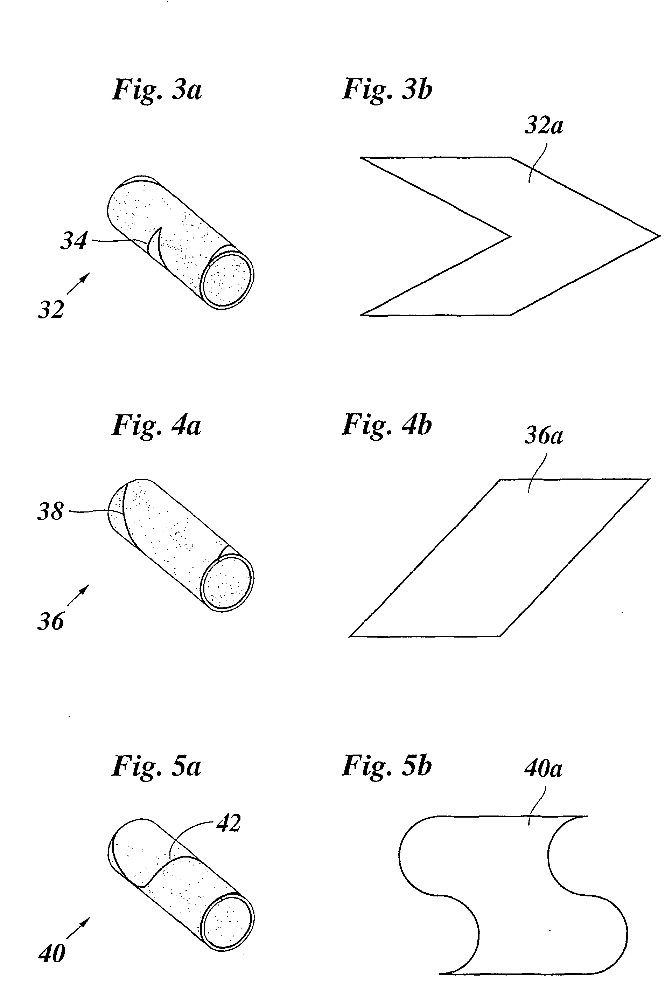

Wahlweise können bei dem in Figuren 1 und 2 gezeigten Ausführungsbeispiel die Schraubfedern 18 auch durch anders gestaltete eigenelastische Hohlkörper ersetzt werden, beispielsweise durch Hohlzylinder mit oder ohne Naht. Fig. 3a zeigt als Beispiel einen als Hohlzylinder 32 ausgebildeten Wälzkörper, der durch Aufrollen des in Fig. 3b gezeigten Zuschnitts 32a gebildet wird. Die Enden des Zuschnitts liegen bei dem fertigen Hohlkörper 32 auf Stoß aneinander und bilden eine Naht 34. Im gezeigten Beispiel verläuft die Naht 34 V-förmig, und jeder Schenkel des V läuft genau einmal um den Umfang des Hohlzylinders um. Auf diese Weise ist sichergestellt, daß der elastische Verformungswiderstand des Wälzkörpers sich im Verlauf der Abrollbewegung nicht wesentlich ändert.

Figur 4a zeigt einen Hohlzylinder 36, der aus dem in Fig. 4b gezeigten Zuschnitt 36a hergestellt ist. In diesem Fall läuft die Naht 38 einmal schraubenförmig auf dem Umfang des Wälzkörpers um.

Fig. 5a zeigt einen Hohlkörper 40 gemäß einem weiteren Ausführungsbeispiel, und Fig. 5b zeigt den zugehörigen Zuschnitt 40a. Bei diesem Hohlkörper verläuft die Naht 42 wellenförmig. Da die Naht 42 den Umfang des Wälzkörpers nicht vollständig umschlingt, kann sich beim Überrollen der Naht eine geringfügige Änderung des Verformungswiderstands ergeben. Aufgrund des wellenförmigen Verlaufs der Naht ist die Zone, in welcher der Hohlkörper ein weicheres Verformungsverhalten hat, jedoch über einen großen Winkelbereich verteilt, so daß sich die Unterschiede im Verformungsverhalten nicht nachteilig bemerkbar machen. Wenn, wie in Fig. 2, eine Vielzahl von Wälzkörpern parallel zueinander angeordnet ist, läßt sich das Verformungsverhalten dadurch weiter vergleichmäßigen, daß die Hohlzylinder 40 so in die zugehörigen Durchbrüche 26 eingelegt werden, daß ihre Nähte 42 jeweils etwas gegeneinander verdreht sind, so daß sie beim Verstellen des Teleskopmechanismus zeitversetzt überrollt werden.

## Patentansprüche

1. Teleskopmechanismus, insbesondere für Lenksäulen von Kraftfahrzeugen, mit einem Innenglied (10), das an mindestens einer Seite eine Abflachung (12) aufweist, und einem zu dem Innenglied komplementären Außenglied (14), in dem das Innenglied (10) mit Wälzkörpern geführt ist, die an der Abflachung (12) abrollen und dazu ausgebildet sind, ein Drehmoment zwischen Innenglied und Außenglied spielfrei zu übertragen, **dadurch gekennzeichnet, daß** zumindest einige der Wälzkörper als elastische Hohlkörper (18; 32; 36; 40) ausgebildet sind.

2. Teleskopmechanismus nach Anspruch 1, **dadurch gekennzeichnet, daß** die Hohlkörper Schraubenfedern (18) sind.

3. Teleskopmechanismus nach Anspruch 2, **dadurch gekennzeichnet, daß** die Schraubenfedern (18) Zugfedern sind, deren Windungen im unbelasteten Zustand auf Block aneinanderliegen.

4. Teleskopmechanismus nach Anspruch 2 oder 3, **dadurch gekennzeichnet, daß** die Schraubenfedern (18) aus einem Federstahldraht mit rechteckigem Querschnitt gebildet sind.

5. Teleskopmechanismus nach Anspruch 1, **dadurch gekennzeichnet, daß** die Hohlkörper Hohlzlinder (32; 36; 40) sind.

6. Teleskopmechanismus nach Anspruch 5, **dadurch gekennzeichnet, daß** die Hohlzylinder (32; 36; 40) durch Aufrollen eines Zuschnitts (32a; 36a; 40a) gebildet sind, derart, daß die Enden des Zuschnitts unter Bildung einer Naht (34; 38; 42) auf Stoß an einander liegen.

7. Teleskopmechanismus nach Anspruch 6, **dadurch gekennzeichnet, daß** die Naht (34; 38; 42) schräg zur Achse des Hohlzylinders verläuft.

8. Teleskopmechanismus nach Anspruch 7, **dadurch gekennzeichnet, daß** die Naht (34; 38) mindestens einmal um den Hohlzylinder umläuft.

9. Teleskopmechanismus nach einem der vorstehenden Ansprüche, **dadurch gekennzeichnet, daß** das Innenglied (10) einen polygonalen Außenquerschnitt hat und mehrere Abflachungen (12) bildet, die sich jeweils über einen Satz der Hohlkörper (18) an einer entsprechenden Abflachung (16) des Innenquerschnitts des Außengliedes (14) abstützen.

10. Teleskopmechanismus nach einem der vorstehenden Ansprüche, **dadurch gekennzeichnet, daß** die Hohlkörper (18) in einem Käfig (20) gehalten sind, der den Zwischenraum zwischen dem Innenglied (10) und dem Außenglied (14) mit geringem Spiel ausfüllt und den Bereich der elastischen Verformung des Außenquerschnitts der Schraubenfedern (18) begrenzt.

11. Teleskopmechanismus nach den Ansprüchen 9 und 10, **dadurch gekennzeichnet, daß** der Käfig (20) mehrere verdickte Abschnitte (22) bildet, die jeweils einer Abflachung (12) des Innengliedes (10) zugeordnet sind und einen Satz Hohlkörpern (18) aufnehmen und die durch flexible Stege (24) miteinander verbunden sind.

12. Teleskopmechanismus nach Anspruch 11, **dadurch gekennzeichnet, daß** der Käfig (20) ein als gestrecktes Band hergestelltes Spritzgußteil ist, das sich an den Stegen (24) in eine dem Außenquerschnitt des Innengliedes (10) entsprechende Form biegen läßt.

13. Teleskopmechanismus nach einem der vorstehenden Ansprüche, **dadurch gekennzeichnet, daß** in mindestens einen der Hohlkörper (18) eine massive zylindrische Rolle (30) eingesteckt ist, die die Innenfläche des Hohlkörpers (18) mit Spiel abstützt und die elastische Verformung des Außenquerschnitts des Hohlkörpers begrenzt.

## Claims

1. Telescopic mechanism, especially for steering columns of motor vehicles, having an inner member (10), which has a flattened portion (12) on at least one side, and having an outer member (14), which is complementary with the inner member and in which the inner member (10) is guided by means of roller bodies which roll along the flattened portion (12) and are constructed to transmit a torque between the inner member and the outer member without clearance, **characterised in that** at least some of the roller bodies are in the form of resilient hollow bodies (18; 32; 36; 40).

2. Telescopic mechanism according to claim 1, **characterised in that** the hollow bodies are helical springs (18).

3. Telescopic mechanism according to claim 2, **characterised in that** the helical springs (18) are tension springs whose turns tightly abut one another in the unloaded state.

4. Telescopic mechanism according to claim 2 or 3, **characterised in that** the helical springs (18) are formed from a spring steel wire having a rectangular cross-section.

5. Telescopic mechanism according to claim 1, **characterised in that** the hollow bodies are hollow cylinders (32; 36; 40).

6. Telescopic mechanism according to claim 5, **characterised in that** the hollow cylinders (32; 36; 40) are formed by rolling up a blank (32a; 36a; 40a) in such a manner that the ends of the blank lie against one another in abutting relationship with the formation of a seam (34; 38; 42).

7. Telescopic mechanism according to claim 6, **characterised in that** the seam (34; 38; 42) extends in an inclined manner relative to the axis of the hollow cylinder.

8. Telescopic mechanism according to claim 7, **characterised in that** the seam (34; 38) extends around the hollow cylinder at least once.

9. Telescopic mechanism according to any one of the preceding claims, **characterised in that** the inner member (10) has a polygonal outer cross-section and forms several flattened portions (12) which are each supported by way of a respective set of hollow bodies (18) against a corresponding flattened portion (16) of the inner cross-section of the outer member (14).

10. Telescopic mechanism according to any one of the preceding claims, **characterised in that** the hollow bodies (18) are held in a cage (20) which fills the intermediate space between the inner member (10) and the outer member (14) with slight clearance and delimits the range of the resilient deformation of the outer cross-section of the helical springs (18).

11. Telescopic mechanism according to claims 9 and 10, **characterised in that** the cage (20) forms several thickened portions (22) which are each associated with a respective flattened portion (12) of the inner member (10) and each accommodate a respective set of hollow bodies (18) and which are connected to one another by flexible webs (24).

12. Telescopic mechanism according to claim 11, **characterised in that** the cage (20) is an injection-moulded part which is manufactured in the form of an elongate strip and which can be bent at the webs (24) into a shape corresponding to the outer cross-section of the inner member (10).

13. Telescopic mechanism according to any one of the preceding claims, **characterised in that** a solid cylindrical roll (30) is inserted into at least one of the hollow bodies (18), which roll (30) supports the inner face of the hollow body (18) with clearance and delimits the resilient deformation of the outer cross-section of the hollow body.

## Revendications

1. Mécanisme télescopique, en particulier pour des colonnes de direction de véhicules automobiles, avec un élément intérieur (10), qui présente un méplat (12) sur au moins un côté et un élément extérieur (14) complémentaire de l'élément intérieur, dans lequel l'élément intérieur (10) est guidé avec des corps de roulement, qui roulent sur le méplat (12) et sont constitués, pour transmettre sans jeu un couple de rotation entre l'élément intérieur et l'élément extérieur, **caractérisé en ce qu'**au moins quelques-uns des corps de roulement sont constitués en tant que corps creux élastiques (18 ; 32 ; 36 ; 40).

2. Mécanisme télescopique selon la revendication 1, **caractérisé en ce que** les corps creux sont des ressorts à boudin (18).

3. Mécanisme télescopique selon la revendication 2, **caractérisé en ce que** les ressorts à boudin (18) sont des ressorts de fraction, dont les spires s'appliquent situées les unes contre les autres en bloc, à l'état non contraint.

4. Mécanisme télescopique selon la revendication 2 ou 3, **caractérisé en ce que** les ressorts à boudin (18) sont formés à partir d'un fil d'acier à ressort, de section transversale rectangulaire.

5. Mécanisme télescopique selon la revendication 1, **caractérisé en ce que** les corps creux sont des cylindres creux (32 ; 36 ; 40).

6. Mécanisme télescopique selon la revendication 5, **caractérisé en ce que** les cylindres creux (32 ; 36 ; 40) sont formés par enroulement d'un plan (32a ; 36a ; 40a), de telle sorte que les extrémités du plan s'appliquent les unes contre les autres bout à bout, en formant un joint (34 ; 38 ; 42).

7. Mécanisme télescopique selon la revendication 6, **caractérisé en ce que** le joint (34 ; 38 ; 42) s'étend en biais par rapport à l'axe du cylindre creux.

8. Mécanisme télescopique selon la revendication 7, **caractérisé en ce que** le joint (34 ; 38) fait au moins une fois le tour du cylindre creux.

9. Mécanisme télescopique selon l'une des revendications précédentes, **caractérisé en ce que** l'élément intérieur (10) a une section transversale extérieure polygonale et forme plusieurs méplats (12), qui s'appuient respectivement sur un méplat correspondant (16) de la section transversale intérieure de l'élément extérieur (14), par l'intermédiaire d'un ensemble de corps creux (18).

10. Mécanisme télescopique selon l'une des revendications précédentes, **caractérisé en ce que** les corps creux (18) sont maintenus dans un caisson (20), qui remplit l'espace intermédiaire entre l'élément intérieur (10) et l'élément extérieur (14) avec un faible jeu et limite la zone de la déformation élastique de la section transversale extérieure des ressorts à boudin (18).

11. Mécanisme télescopique selon les revendications 9 et 10, **caractérisé en ce que** le caisson (20) forme plusieurs sections épaissies (22), qui sont associées respectivement à un méplat (12) de l'élément intérieur (10) et logent un ensemble de corps creux (18) et qui sont reliées entre elles par des barrettes flexibles (24).

12. Mécanisme télescopique selon la revendication 11, **caractérisé en ce que** le caisson (20) est une pièce moulée par injection, fabriquée en tant que bande allongée, qui se laisse cintrer, sur les barrettes (24), en une forme, correspondant à la section transversale extérieure de l'élément intérieur (10).

13. Mécanisme télescopique selon l'une des revendications précédentes, **caractérisé** dans au moins l'un des corps creux (18) est enfoncé un rouleau cylindrique, massif (30), qui supporte à jeu la surface interne du corps creux (18) et limite la déformation élastique de la section transversale extérieure du corps creux.
